# EUROPÄISCHE PATENTSCHRIFT

(11) **EP 0 932 512 B1**
(45) Veröffentlichungstag und Bekanntmachung des Hinweises auf die Patenterteilung: **22.08.2001**
(21) Anmeldenummer: 97945829.6
(22) Anmeldetag: 14.10.1997
(51) Int. Cl.: B60G 9/02

(54) **PENDELND GELAGERTE, GEFEDERTE ACHSAUFHÄNGUNG**
PENDULAR SPRING MOUNTED AXLE SUSPENSION
SUSPENSION OSCILLANTE D'ESSIEU

(30) Priorität: 19.10.1996 DE 19643263
(43) Veröffentlichungstag der Anmeldung: 04.08.1999
(73) Patentinhaber: DEERE & COMPANY, Moline, Illinois 61265-8098 (US)
(72) Erfinder: ALTHERR, August, D-67661 Kaiserslautern (DE); GELB, Herbert, D-68766 Hockenheim (DE); TEICH, Michael, D-68199 Mannheim (DE)
(74) Vertreter: Lau-Loskill, Philipp, Dipl.-Phys.
(86) Internationale Anmeldenummer: EP9705651
(87) Internationale Veröffentlichungsnummer: WO9817488

(56) Entgegenhaltungen:
- EP-A- 0 499 887
- EP-A- 0 603 394
- DE-A- 3 901 757
- DE-A- 4 129 715
- DE-A- 19 621 519
- GB-A- 818 992

## Beschreibung

Die Erfindung betrifft die Aufhängung eines an einem industriellen oder landwirtschaftlichen Fahrzeug pendelnd gelagerten starren Achskörpers, der mittels einer im wesentlichen vertikal wirkenden Federeinrichtung an dem Fahrzeugaufbau, beispielsweise an dem Fahrgestell, einem Chassis oder Rahmen des Fahrzeugs aufgehängt ist. Zur Abstützung des Achskörpers in Fahrzeuglängsrichtung dient ein in Fahrzeuglängsrichtung verlaufender Schublenker. Zur Abstützung der Seitenkräfte ist ein im wesentlichen horizontal und quer zur Fahrzeuglängsachse verlaufender Querlenker (Seitenführungsstrebe) vorgesehen, der einenends an dem Fahrzeugaufbau angelenkt und anderenends über ein Pendellager mit dem Achskörper derart verbunden ist, daß der Achskörper eine Pendelbewegung um die Pendelachse ausführen kann.

Landwirtschaftliche und industrielle Fahrzeuge, wie beispielsweise Ackerschlepper, weisen häufig einen starren Vorderachskörper auf, der lenkbare Räder trägt. Damit bei Bodenunebenheiten die Räder nicht ihren Bodenkontakt verlieren, ist der Vorderachskörper pendelnd am Fahrzeugaufbau gelagert. Je nachdem, ob das Fahrzeug in Blockbauweise aufgebaut ist oder einen die Fahrzeugkomponenten tragenden Grundrahmen aufweist, kann der Vorderachskörper über einen oder mehrere miteinander fluchtende Pendelbolzen am Vorderachsbock, der an einer Fahrzeugkomponente befestigt ist, oder an einem Teil des Fahrzeuggrundrahmens pendelnd befestigt sein. Der Pendelwinkel wird begrenzt, damit der Achskörper und die Räder beim Pendeln nicht gegen andere Fahrzeugteile stoßen. Bei zu großem Pendelwinkel könnten beispielsweise die Bereifung sowie die Kotschützer das Chassis beschädigen. Die Größe des zulässigen Pendelwinkels hängt von der Fahrzeuggeometrie ab und kann z. B. 11° betragen. Beispielsweise kann zur Begrenzung des Pendelwinkels der Achskörper auf seiner Oberseite beidseits des Pendelbolzens je ein Anschlaghorn tragen, daß mit einer entsprechenden Anschlagstelle des Vorderachsbocks oder Fahrzeugrahmens derart zusammenwirkt, daß bei Erreichen des zulässigen Pendelwinkels das Anschlaghorn gegen die Anschlagstelle stößt.

Um die Fahrsicherheit und den Fahrkomfort von Arbeitsfahrzeugen bei Arbeitseinsätzen und insbesondere auch bei höheren Transportgeschwindigkeiten zu erhöhen, kann die Vorderachse federnd am Fahrzeugaufbau aufgehängt werden, wie es beispielsweise aus der EP-A-0 518 226 hervorgeht. Dort stützt sich die Vorderachse über eine hydropneumatische Federung mit zwei Hydraulikzylindern am Fahrzeugrahmen ab. Jeder der beiden Hydraulikzylinder greift einenends an der Vorderachse, und zwar weit außen, in der Nähe eines der Vorderräder, und andernends an einem über die Motorabdeckung seitlich vorstehenden Rahmenteil an.

Eine solche Anordnung mit weit außen liegenden Hydraulikzylindern erlaubt eine Auslegung, bei der die Endanschläge der Hydraulikzylinder zum einen einen ausreichend großen Federhub des Fahrzeuges ermöglichen und zum anderen den Pendelwinkel auf ein zulässiges Maß begrenzen, was jedoch in der EP-A-0 518 226 nicht näher erläutert wurde. Nachteilig hierbei ist es, daß die weit außen liegenden Hydraulikzylinder die Sichtverhältnisse beeinträchtigen. Bei einer Verlagerung der Hydraulikzylinder weiter nach innen ergibt sich bei Beibehaltung des gleichen Federhubs der Hydraulikzylinder ein größerer Pendelwinkel. Der zulässige Pendelwinkel ist jedoch, wie oben beschrieben, begrenzt.

Die gattungs gemäße DE-A-39 01 757 beschreibt die Aufhängung einer Starrachse, die über ein Pendellager waagebalkenartig im mittleren Bereich eines Querlenkers gelagert ist. Der Querlenker ist mit seinem einem Ende am Fahrgestell schwenkbar geführt und mit seinem anderen Ende gegenüber dem Fahrgestell mittels eines Feder-Dämpferelements abgefedert. Der Pendelwinkel wird durch Anschlagelemente begrenzt. Es werden Zuganschläge in Form von Seilkauschen und Führungshülsen sowie Druckanschläge in Form von Befestigungsaugen und Anschlagflächen beschrieben. Die Wirkungslinie der Anschlagelemente ist im wesentlichen vertikal ausgerichtet. Hierdurch ist bei einem vorgegebenen maximalen Pendelwinkel und einem vorgegebenen Federhub die axiale Lage der Anschlagelemente festgelegt. Dies kann, wie im Zusammenhang mit den Hydraulikzylindern der EP-A-0 518 226 erläutert wurde nachteilig sein.

Die der Erfindung zugrunde liegende Aufgabe wird darin gesehen, eine pendelnd gelagerte und gefederte Achsaufhängung der eingangs genannten Art derart auszubilden, daß die genannten Probleme überwunden werden. Insbesondere soll die Ausbildung der Achsaufhängung eine Begrenzung des Pendelwinkels erzwingen, ohne den Federungskomfort zu beeinträchtigen. Sie soll auch für beengte Bauräume geeignet sein und die Sichtverhältnisse nicht einschränken. Ferner sollen die in den einzelnen Komponenten auftretenden Kräfte in vertretbaren Größen bleiben.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Bei einer erfindungsgemäßen Achsaufhängung ist zwischen dem Achskörper und dem Fahrzeugaufbau wenigstens eine erste Pendelstop- oder Anschlageinrichtung mit einer achsfesten Anlenkstelle, die zur Pendelachse beabstandet ist, und einer chassisfesten Anlenkstelle angeordnet. Die Verbindungslinie der beiden Anlenkstellen verläuft überwiegend in Richtung der axialen Erstreckung des Achskörpers, d. h. die beiden Anlenkstellen sind wenigstens in Richtung der axialen Erstreckung des Achskörpers zueinander beabstandet. Beim Pendeln, bei dem sich der Achskörper um die Pendelachse verschwenkt, und beim Federn, bei dem sich der Abstand zwischen dem Achskörper und dem Fahrzeugaufbau ändert, bewegen sich die Anlenkstellen relativ zueinander. Die Pendelstopeinrichtung ist derart ausgebildet, daß sie vorallem den axialen Abstand zwischen den beiden Anlenkstellen und damit den Pendelausschlag des Achskörpers auf einen vorgebbaren maximalen und/oder einen vorgebbaren minimalen Grenzwert begrenzt.

Vorzugsweise verläuft die Verbindungslinie zwischen der achsfesten Anlenkstelle und der chassisfesten Anlenkstelle im wesentlichen quer zur Fahrzeuglängsrichtung und quer zur Ausrichtung der vertikal wirkenden Federeinrichtung also im wesentlichen horizontal.

Durch die erste Pendelstopeinrichtung wird im wesentlichen der horizontale Freiheitsgrad der Pendelbewegung eingeschränkt. Der Federweg der Federeinrichtung verläuft hingegen vertikal. Damit ist es möglich, den Pendelwinkel weitgehend unabhängig von den Federeigenschaften zu begrenzen. Eine erste Pendelstopeinrichtung wird im wesentlichen unabhängig von der Einfederung nur dann aktiv, wenn der maximal zulässige Pendelwinkel erreicht ist. Pendelausschläge, bei denen der maximal zulässige Pendelwinkel nicht erreicht wird, werden von der Federeinrichtung aufgenommen und gegebenenfalls gedämpft.

Die erfindungsgemäße Achsaufhängung ermöglicht es, den Einbauort der Federeinrichtung weitgehend frei zu wählen und insbesondere hinsichtlich günstiger Sichtverhältnisse und des zur Verfügung stehenden Bauraums zu optimieren. Der ursprüngliche Lenkeinschlag einer Lenkachse wird nicht eingeschränkt, ausreichende Freiräume zwischen dem Rad bzw. dem Kotschützer und dem Chassis können eingehalten werden und Montageräume für Zusatzgeräte, wie Frontlader, bleiben erhalten. Es hat sich ferner herausgestellt, daß die in den einzelnen Komponenten der Achsaufhängung auftretenden Kräfte sehr gut beherrschbar sind, so daß Verschleißprobleme und die Gefahr von Überlastungen gering sind. Die erfindungsgemäße Anordnung weist einen einfachen Aufbau auf und läßt sich mit relativ wenigen Bauteilen kostengünstig realisieren. Sie ist modular aufbaubar und ermöglicht die Bereitstellung eines Nachrüstsatzes für bisher ungefederte Achsaufhängungen, so daß mit relativ wenigen Neuteilen ein ungefedertes Basisfahrzeug in eine gefederte Version umgewandelt werden kann.

Es ist von besonderem Vorteil die Pendelachse des Pendellagers in die in Fahrzeuglängsrichtung verlaufende, senkrechte Fahrzeugmittelebene zu legen und höher anzuordnen, als die Drehachsen der von dem Achskörper getragenen Fahrzeugräder. Die achsfeste Anlenkstelle der Pendelstopeinrichtung kann dabei beispielsweise tiefer, in etwa auf der Achsmittellinie des Achskörpers liegen. Bei dieser Anordnung führt der Achskörper beim Pendeln ein Ausschwingen mit seitlicher Bewegungungskomponente aus. Dies schafft einen zusätzlichen Freiraum zwischen Innenrad und Chassis, was sich besonders bei Kurvenfahrt wegen der dann engen Raumverhältnisse vorteilhaft auswirkt.

Gemäß einer bevorzugten Ausgestaltung der Erfindung befinden sich beidseits der Pendelachse je eine chassisfeste Anlenkstelle, an denen je eine zugehörige Pendelstopeinrichtung angreift, die den maximalen Abstand zwischen der jeweiligen chassisfesten Anlenkstelle und einer zugehörigen achsfesten Anlenkstelle begrenzt. Hierdurch läßt sich ein hinsichtlich beider Achshälften symmetrischer Aufbau und eine für beide Seiten im wesentlichen gleiche Wirkungsweise erreichen. Jede Pendelstopeinrichtung greift zweckmäßigerweise an einer eigenen achsfesten Anlenkstelle an.

Vorzugsweise ist wenigstens eine zweite Pendelstopeinrichtung vorgesehen, die eine Relativbewegung zwischen Achskörper und Fahrzeugaufbau in vertikaler Richtung begrenzt. Als eine zweite Pendelstopeinrichtung kann ein nach oben vorstehendes Anschlaghorn oder ein nach oben gerichteter Höcker des Achskörpers und ein oberhalb des Anschlaghorns oder Höckers liegender Anschlagbereich des Fahrzeugaufbaus dienen. Zweckmäßigerweise ist beidseits der Pendelachse je eine derartige vertikal wirkende Pendelstopeinrichtung vorgesehen. Die Verwendung derartiger zweiter Pendelstopeinrichtungen ist insbesondere dann sinnvoll, wenn bei stark eingefedertem Achskörper der Freiraum zwischen dem Rad bzw. dem Kotschützer und dem Fahrzeugchassis derart eingeschränkt ist, daß der an sich zulässige und durch die erste Pendelstopeinrichtung begrenzte Pendelwinkel von beispielsweise 11° zu groß ist, um eine Beschädigung des Fahrzeugchassis auszuschließen.

Gemäß einer weiteren bevorzugten Ausgestaltung der Erfindung enthält die im wesentlichen horizontal wirkende erste Pendelstopeinrichtung eine Kette mit wenigstens zwei Gliedern, deren eines Ende an der achsfesten Anlenkstelle und deren anderes Ende an der chassisfesten Anlenkstelle befestigt ist. Die Kette ist bei einer neutralen Ausrichtung des Achskörpers nicht gespannt und hängt durch. Mit zunehmendem Pendelausschlag in die entsprechende Richtung strafft sich die Kette und begrenzt schließlich den Pendelausschlag. Der maximal zulässige Pendelwinkel läßt sich leicht durch Auswahl von Ketten geeigneter Länge anpasssen. Ketten sind kostengünstig herstellbar und weisen eine hohe Festigkeit auf. Sie erfordern relativ geringen Bauraum und lassen sich an die konkreten Platzverhältnisse leicht anpassen.

Die Kette enthält zweckmäßigerweise drei im wesentlichen ringförmige Glieder, deren beide äußere Endglieder in Bolzen, die die Anlenkstellen bilden, eingehängt sind. Die Kettenglieder können unterschiedliche Längen aufweisen. Jedes Endglied ist vorzugsweise tropfenförmig ausgebildet, so daß sich seine ringförmig eingeschlossene Durchtrittsöffnung zu einer Seite aufweitet. Die Seite mit dem erweiterten Durchtrittsquerschnitt nimmt den jeweiligen Bolzen auf, während auf der gegenüberliegenden Seite mit dem engeren Durchtrittsquerschnitt das mittlere Kettenglied eingehängt ist. Diese Kettenausbildung ermöglicht die Verwendung relativ schlanker Kettenglieder in Verbindung mit vergleichsweise dicken, für hohe Kräfte geeigneten Absteckbolzen. Sie beansprucht relativ geringen Bauraum und ist dennoch zur Aufnahme hoher Kräfte geeignet.

Eine weitere bevorzugte Ausgestaltung der Erfindung sieht vor, daß im mittleren Bereich des Achskörpers zwei nebeneinander liegende achsfeste Anlenkstellen vorgesehen sind. An jedem der achsfesten Anlenkstellen ist ein erstes Ende einer Kette befestigt, die aus wenigstens zwei, vorzugsweise drei Gliedern besteht. Die beiden Ketten erstrecken sich im wesentlichen quer zur Fahrzeugausrichtung in entgegen gesetzte Richtungen nach außen. Ihr jeweils zweites Ende ist an zugehörigen chassisfesten Anlenkstellen befestigt. Die Ketten sind in neutraler Pendelwinkellage des Achskörpers lose. Bei Erreichen eines maximal zulässigen Pendelwinkels strafft sich eine der beiden Ketten und begrenzt das Auspendeln des Achskörpers. Der hinsichtlich der Pendelachse nahezu symmetrische Aufbau gewährleistet ein beiderseits im wesentlichen identisches Verhalten.

Eine alternative Ausführungsform der Erfindung sieht vor, daß die Pendelstopeinrichtung ein starres Verbindungselement enthält, das über eine erste Anlenkung an der achsfesten Anlenkstelle und über eine zweite Anlenkung an der chassisfesten Anlenkstelle angelenkt ist. Die erste und/oder zweite Anlenkung zwischen dem Verbindungselement und der zugehörigen Anlenkstelle ist derart ausgebildet, daß sich das Verbindungselement innerhalb vorgebbarer Grenzen relativ zur Anlenkstelle längs der Verbindungslinie zwischen den beiden Anlenkstellen verschieben läßt.

Als Verbindungselement kommt zweckmäßigerweise ein laschenförmiges Bauteil in Betracht, dessen eines Ende im wesentlichen eine Bohrung enthält, die eine bolzenförmig ausgebildete Anlenkstelle aufnimmt, und in dessen anderem Ende im wesentlichen ein Längsschlitz ausbildet ist, der die zweite bolzenförmige Anlenkstelle aufnimmt. Die Lage und Länge des Längsschlitzes bestimmt den zulässigen Pendelwinkel. Der Längsschlitz läßt sich so ausbilden, daß einer seiner Endpunkte oder beide seiner Endpunkte einen Anschlag oder Stop zur Begrenzung des Pendelwinkels in eine der beiden Pendelrichtungen bildet.

Als weitere vorteilhafte Varianten für eine Pendelstopeinrichtung können zwischen jeweils einer achsfesten Anlenkstelle und einer chassisfesten Anlenkstelle beispielsweise ein Seil, ein Teleskop oder ein Ausknicksystem angeordnet werden. Das Seil wirkt ähnlich wie die oben beschriebene Kette. Ein Teleskop könnte zusätzlich zur Begrenzung der Relativbewegung eine Dämpferfunktion übernehmen. Das Ausknicksystem kann ein 2-Gelenk enthalten, welches aus zwei Knickstäben besteht, deren Anlenkstellen sphärische Lager sind und die durch ein Ausknicklager miteinander verbunden sind. Das Ausknicken ermöglicht die Relativbewegung zwischen den Anlenkstellen. Um hierbei zu gewährleisten, daß das Ausknicken nur in eine Richtung erfolgt und daß eine gestreckte Totpunktslage vermieden wird, kann ein entsprechender Anschlag zwischen den beiden Knickstäben vorgesehen werden.

Um die Sichtverhältnisse des Fahrzeugs durch Komponenten der gefederten Achsaufhängung nicht zu behindern ist es vorteilhaft, wenn die Federeinrichtung im wesentlichen innerhalb des Bereichs des Fahrzeugrumpfes, beispielsweise innerhalb eines Fahrzeugrahmens oder innerhalb der Motorverkleidung angeordnet ist. Eine derartige Federeinrichtung kann einen Federhub aufweisen, der grundsätzlich einen Pendelwinkel zuläßt, der größer als der gewünschte maximale Pendelwinkel ist. Der Pendelwinkel wird dann durch die erfindungsgemäße Pendelstopeinrichtung begrenzt. Die Pendelstopeinrichtung wird bei reiner Einfederung nicht wirksam.

Vorzugsweise enthält die Federeinrichtung zwei Hydraulikzylinder, die auf gegenüberliegenden Seiten symmetrisch zur Pendelachse an dem Achskörper einerseits und an in etwa vertikal darüberliegenden Anlenkstellen des Fahrzeugaufbaus andererseits angelenkt sind. Die Hydraulikzylinder können zu einem hydropneumatischen Federdämpfersystem gehören und unter Zwischenschaltung von Ventilmitteln an wenigstens einen Hydraulikspeicher angeschlossen sein. Die Hydraulikzylinder lassen sich auch über eine Steuerung derart miteinander verbinden, daß bei einer Pendelbewegung des Achskörpers überschüssige Hydraulikflüssigkeit von einem Hydraulikzylinder in den anderen fließt, jedoch kein Flüssigkeitsabfluß erfolgt, so daß ein Federn unterdrückt, das Pendeln jedoch zugelassen wird. Eine Drosselstelle in der Verbindungsleitung kann die Pendelbewegung dämpfen.

Vorzugsweise findet die erfindungsgemäße Achsaufhängung bei einer angetriebenen, lenkbaren Vorderachse Anwendung.

Die Abstützung des Achskörpers erfolgt in vorteilhafterweise durch einen Schublenker, der ein nach oben offenes, im wesentlichen U-förmiges Querschnittsprofil aufweist. Das hintere Ende des Schublenkers ist kugelgelenkig mit dem Fahrzeugaufbau verbunden, so daß der Achskörper einerseits nach oben und unten und andererseits zur Seite auspendeln kann. Das vordere Ende des Schublenkers ist starr mit dem Achskörper verbunden. Innerhalb des U-förmigen Schublenkers ist eine dem Achsantrieb dienende Gelenkwelle angeordnet. Durch das U-förmige Profil wird die Gelenkwelle von unten und den Seiten abgedeckt und geschützt. Da der Schublenker oben offen bleibt, läßt sich ein kleiner Abstand zwischen dem Schublenker und einer darüberliegenden Ölwanne einhalten. Dies ist besonders bei einer als Nachbausatz ausgebildeten gefederten Achsaufhängung von Vorteil, da der Fahrzeugaufbau für den Nachbausatz gegenüber seiner bisherigen Lage nicht, oder nicht wesentlich angehoben werden muß. Der Schublenker läßt sich in unterschiedlichen Längenvarianten ausführen, so daß eine einfache Anpassung an unterschiedliche Getriebe oder Radstände des Fahrzeugs möglich ist.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die perspektivische Ansicht mit auseinander gezogenen Bauteilen eines Schleppers mit Rahmen und erfindungsgemäßer pendelnd gelagerter und gefederter Vorderachsaufhängung,
- Fig. 2: eine Frontansicht wesentlicher Komponenten der Vorderachsaufhängung gemäß Fig. 1,
- Fig. 3a - 3d: vier schematische Darstellungen von unterschiedlichen Achslagen,
- Fig. 4: den Querschnitt einer als Pendelstopeinrichtung ausgebildeten dreigliedrigen Kette und
- Fig. 5: eine als Lasche ausgebildete alternative erste Pendelstopeinrichtung, die anstelle einer gemäß Fig. 1 und 2 ausgebildeten Kette eingesetzt werden kann.

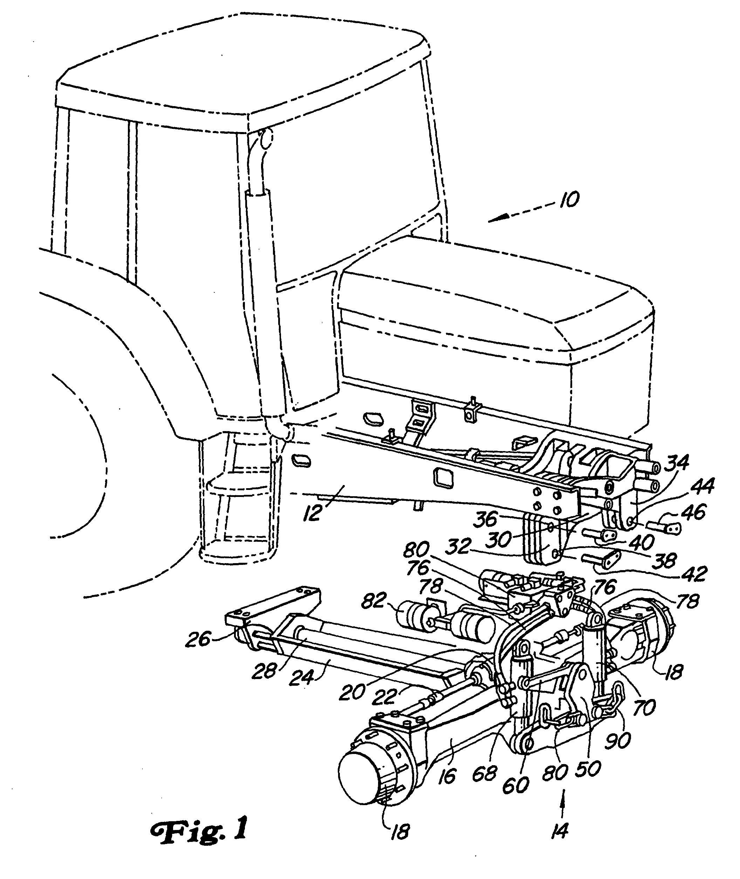

Aus Fig. 1 gehen die Umrisse eines Ackerschleppers 10 hervor, dessen nicht näher dargestellte Antriebsaggregate, wie Motor, Getriebe und dergleichen von einem Rahmen 12 getragen werden. Der vordere Rahmenbereich stützt sich auf einer Vorderachse 14 ab, die als Starrachse ausgebildet ist und einen starren Achskörper 16 aufweist. An den beiden äußeren Enden des Achskörpers 16 befindet sich je ein Radkopf 18, der ein nicht gezeigtes Vorderrad des Schleppers aufnimmt. Die Radköpfe 18 sind auf zugehörigen Achsschenkeln gelagert und lassen sich auf übliche Weise durch Lenkzylinder 20 und Lenkgestänge 22 verschwenken.

Mit der Rückseite des Achskörpers 16 ist das vordere Ende eines Schublenkers 24 verschraubt. Das hintere Ende des Schublenkers 24 ist über ein nicht näher dargestelltes Kugelgelenk mit einer an dem Rahmen 12 befestigbaren Aufnahme 26 gelenkig verbunden. Das Kugelgelenk läßt ein Verschwenken des Schublenkers 24 zusammen mit dem Achskörper 16 nach oben und unten sowie zur Seite zu. Der Schublenker 24 weist einen im wesentlichen nach oben offenen U-förmigen Querschnitt auf, der einen Hohlraum nach unten und zu den Seiten einschließt. Innerhalb dieses Hohlraumes erstreckt sich eine übliche Gelenkwelle 28, die dem Vorderradantrieb dient.

Am vorderen Bereich des Rahmens 12 ist ein Tragbock 30 mit zwei seitlichen nach unten vorstehenden Aufnahmeschenkeln 32, 34 befestigt. Der in Fahrtrichtung gesehen rechte Aufnahmeschenkel 32 weist zwei im wesentlichen übereinanderliegende Anlenkbohrungen 36, 38 mit zugehörigen Absteckbolzen 40, 42 auf. Der in Fahrtrichtung gesehen linke Aufnahmeschenkel 34 weist eine Anlenkbohrung 44 mit zugehörigem Absteckbolzen 46 auf. Die Absteckbolzen 40, 42, 46 tragen an ihrem vorderen Ende je eine Lasche mit seitlicher Bohrung, die einer Schraubverbindung des Absteckbolzens 40, 42, 46 mit dem entsprechenden Aufnahmeschenkel 32, 34 und damit einer Drehsicherung des Absteckbolzens 40, 42, 46 dienen.

Der mittlere Bereich des Achskörpers 16 trägt einen nach vorn vorstehenden Frontblock 50. Der Frontblock 50, das dahinter liegende Differentialgehäuse 48 für den Vorderradantrieb und der Achskörper 16 können aus einem Gußteil bestehen. Sie können jedoch auch als zusammenschraubbare Einzelkomponenten ausgebildet sein.

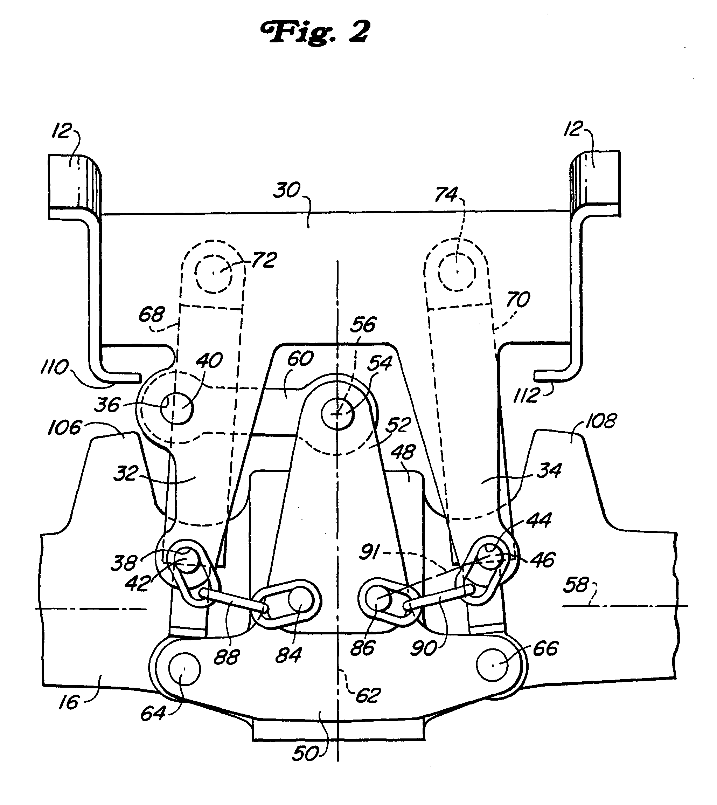

Insbesondere aus Fig. 2 geht hervor, daß der Frontblock 50 einen mittleren nach oben ragenden Schenkel 52 mit einem Pendellager 54 enthält. Die Pendelachse 56 des Pendellagers 54 verläuft mittig in Fahrzeuglängsrichtung und liegt oberhalb der Achsmittellinie 58, die die Drehachse der Vorderräder repräsentieren soll. An dem Pendellager 54 einerseits und an der oberen Anlenkbohrung 36 des rechten Aufnahmeschenkels 32 andererseits ist ein Querlenker 60, auch Panhardstab genannt, angelenkt, der im wesentlichen horizontal und quer zur Fahrzeuglängsrichtung ausgerichtet ist. Der Querlenker 60 dient der seitlichen Abstützung des Achskörpers 16 und ermöglicht es, daß der Achskörper 16 um die Pendelachse 56 ausschwingt oder pendelt.

Der Frontblock 50 enthält zwei seitliche, beidseits der Achsmittelebene 62 und unterhalb der Achsmittellinie 58 liegende Anlenkstellen 64, 66. An jeder dieser Anlenkstellen 64, 66 ist das untere Ende eines Hydraulikzylinders 68, 70 angelenkt, dessen jeweils oberes Ende 72, 74 gelenkig mit dem Tragbock 30 verbunden ist. Die Hydraulikzylinder 68, 70 sind im wesentlichen vertikal ausgerichtet und stützen den Fahrzeugaufbau auf dem Achskörper 16 ab. Es handelt sich um doppeltwirkende Hydraulikzylinder 68, 70, die auf übliche Weise über Hydraulikleitungen 76, 78 mit einem Steuerventilblock 80 und Druckspeichern 82 in Verbindung stehen und ein hydro-pneumatisches Federdämpfersystem bilden. Wenn die Vorderachse als ungefederte, pendelnde Achse betrieben werden soll, werden die beiden Hydraulikzylinder 68, 70 durch den Ventilblock 80, gegebenenfalls unter Zwischenschaltung einer die Pendelbewegung dämpfenden Drossel, kreuzweise miteinander verbunden.

Im mittleren Bereich des Frontblocks 50, in etwa auf der Höhe der Achsmittellinie 58 sind zwei nebeneinander, beidseits der Achsmittelebene 62 liegende Anlenkstellen 84, 86 ausgebildet. An diesen achsfesten Anlenkstellen 84, 86 ist jeweils ein Endglied 87 einer Kette 88, 90 eingehängt. Das jeweils andere Endglied der Ketten 88, 90 ist in einen der chassisfesten Anlenkstellen 38, 44 eingehängt. Die Verbindungslinie 91 der jeweils beiden Anlenkstellen 38, 84 bzw. 44, 86 der Ketten 88, 90 ist überwiegend in Richtung der axialen Erstreckung des Achskörpers 16 ausgerichtet.

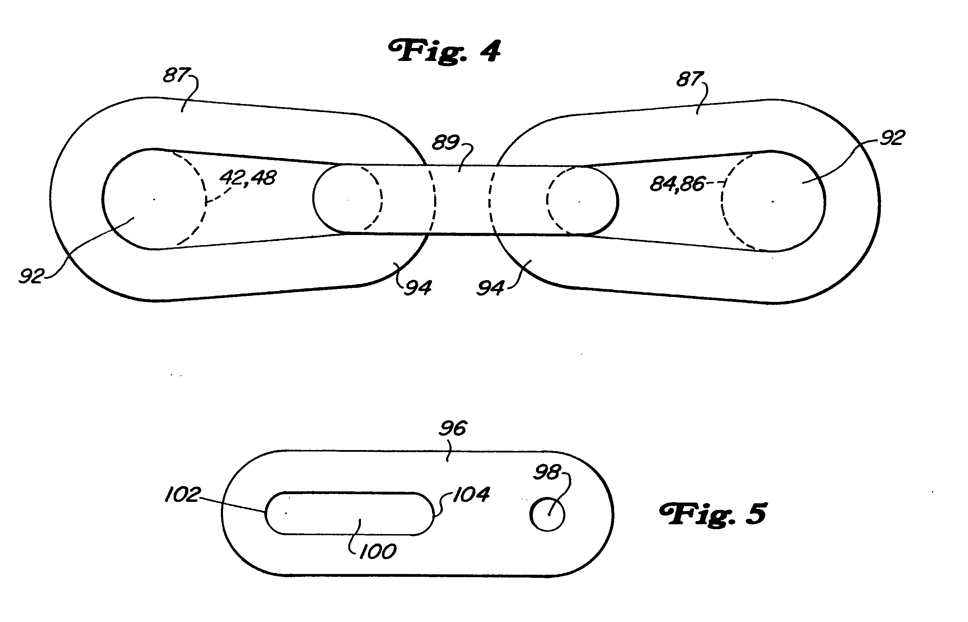

Wie Fig. 4 zeigt, besteht jede Kette 88, 90 aus den beiden Endgliedern 87 und einem mittleren Verbindungsglied 89. Die Endglieder 87 können im wesentlichen tropfenförmig ausgebildet sein. Dabei nimmt die äußere Seite mit dem erweiterten Durchtrittsquerschnitt 92 den jeweiligen Bolzen 42, 46 der Anlenkstelle 38, 44, 84, 86 auf, während in die gegenüberliegende Seite mit dem engeren Durchtrittsquerschnitt 94 das mittlere Verbindungsglied 89 eingehängt ist.

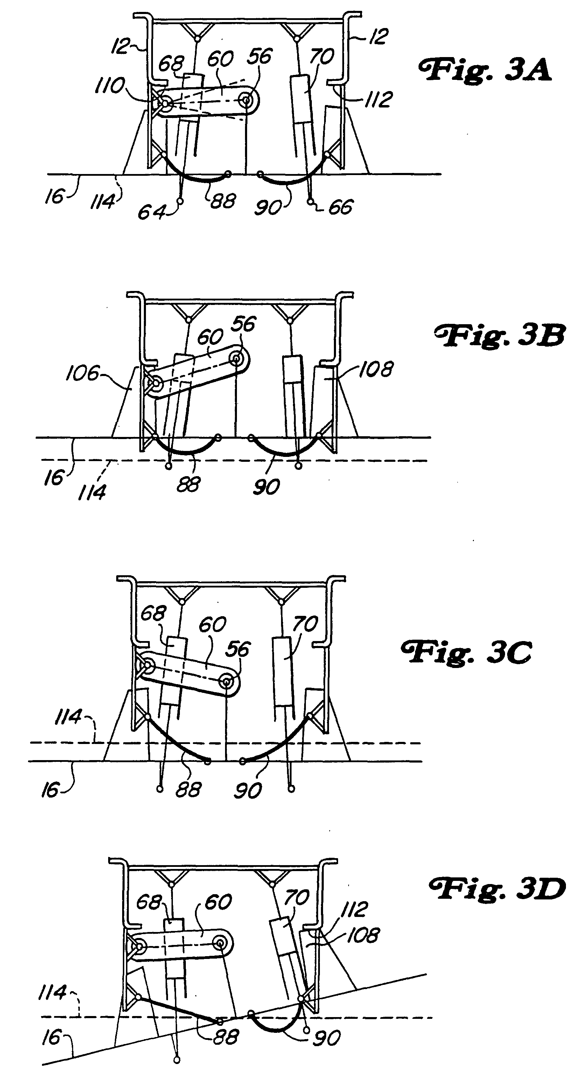

Die Ketten 88, 90 wirken jeweils als erste Pendelstopeinrichtung. Sie hängen in neutraler Pendelwinkellage des Achskörpers 16 lose durch, wie es in Fig. 2 dargestellt ist. Bei Erreichen eines maximal zulässigen Pendelwinkels strafft sich eine der beiden Ketten 88, 90 und begrenzt das Auspendeln des Achskörpers 16 wie es anhand der Fig. 3a bis 3d noch näher beschrieben werden wird. Diese Funktion einer Kette 88, 90 kann auch eine Lasche 96 mit einer Bohrung 98 und einem Langloch 100 gemäß Fig. 5 erfüllen. Die Bohrung 98 nimmt dabei den Bolzen 42, 46 einer Anlenkstelle 38, 44, 84, 86 auf, während der Bolzen der jeweils anderen Anlenkstelle 38, 44, 84, 86 in dem Langloch 100 geführt wird und innerhalb des Langlochs 100 verschiebbar ist. Durch die Wahl der Lage und Länge des Langlochs 100 läßt sich der zulässige Pendelwinkel festlegen. Das Langloch 100 läßt sich so ausbilden, daß jeder seiner Endpunkte 102, 104 einen Anschlag oder Stop zur Begrenzung des Pendelwinkels in eine der beiden Pendelrichtungen bildet.

Zur Ausbildung zweier zweiter Pendelstopeinrichtungen, durch die Relativbewegungen zwischen Achskörper 16 und Fahrzeugaufbau in vertikaler Richtung begrenzt werden, trägt der Achskörper 16 beidseits seiner Achsmittelebene 62 je ein nach oben vorstehendes Anschlaghorn 106, 108. Oberhalb des Anschlaghorns 106, 108 und beabstandet zu diesem befindet sich ein Anschlag 110, 112 des Rahmens 12. Die derart ausgebildeten zweiten Pendelstopeinrichtungen begrenzen den Pendelausschlag des Achskörpers bei stark eingefedertem Achskörper auf einen Winkel der geringer als der an sich zulässige Pendelwinkel von beispielsweise 11° ist.

In den Fig. 3a bis 3d sind vier unterschiedliche Lagen des Achskörpers 16 bezüglich des Fahrzeugaufbaus oder Rahmens 12 dargestellt. Fig. 3a zeigt eine mittlere (neutrale), nicht gependelte Lage 114 des Achskörpers 16. Die beiden Hydraulikzylinder 68, 70 sind halb eingefahren. Der Querlenker 60 nimmt eine im wesentlichen waagerechte Lage ein, und die beiden Ketten 88, 90 hängen durch und sind nicht gespannt. Gemäß Fig. 3b ist der Achskörper 16 voll eingefedert, so daß beide Höcker 106, 108 an den Rahmenanschlägen 110, 112 anliegen. Der Querlenker ist von der Pendelachse 56 aus leicht nach unten geneigt. Die Ketten 88, 90 sind auch hier lose. In Fig. 3c ist eine voll ausgefederte Lage des Achskörpers 16 dargestellt, bei dem die Hydraulikzylinder voll ausgefahren sind. Der Querlenker 60 ist ausgehend von der Pendelachse 56 leicht nach oben geneigt. Auch in dieser Lage sind die beiden Ketten 88, 90 noch etwas lose. Gemäß Fig. 3d ist der Achskörper voll ausgependelt. Die Hydraulikzylinder 68, 70 sind unterschiedlich weit eingefahren. Der Querlenker 60 nimmt in etwa seine mittlere horizontale Stellung ein. Eine Kette 88 ist straff, und wirkt gemeinsam mit der gegenüberliegenden zweiten Pendelstopeinrichtung, bestehend aus Horn 108 und Rahmenanschlag 112, als Pendelanschlag zur Begrenzung des Pendelwinkels. Die andere Kette 90 hängt lose durch. In dieser Lage wird der maximal zulässige Pendelwinkel von beispielsweise 11° eingenommen.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen. Beispielsweise kann zur Ausbildung einer ersten Pendelstopeinrichtung zwischen jeweils einer achsfesten Anlenkstelle 38, 44 und einer chassisfesten Anlenkstelle 84, 86 ein Seil, ein Teleskop oder ein Ausknicksystem angeordnet werden.

## Patentansprüche

1. Aufhängung eines an einem industriellen oder landwirtschaftlichen Fahrzeug (10) pendelnd gelagerten starren Achskörpers (16)
- mit wenigstens einer zwischen Achskörper (16) und Fahrzeugaufbau (12) angeordneten im wesentlichen vertikal wirkenden Federeinrichtung (68, 70),
- mit wenigstens einem in Fahrzeuglängsrichtung verlaufenden Schublenker (24), der den Achskörper (16) in Fahrzeuglängsrichtung am Fahrzeugaufbau (12) abstützt,
- mit wenigstens einem im wesentlichen horizontal und quer zur Fahrzeuglängsachse verlaufenden Querlenker (60), der einenends an dem Fahrzeugaufbau (12) angelenkt und anderenends über ein Pendellager (54) mit dem Achskörper (16) verbunden ist,
- wobei zwischen dem Achskörper (16) und dem Fahrzeugaufbau (12) wenigstens eine erste Pendelstopeinrichtung (88, 90) mit einer zum Pendellager (54) beabstandeten achsfesten Anlenkstelle (84, 86) und einer chassisfesten Anlenkstelle (38, 44) angeordnet ist,
dadurch gekennzeichnet,
- daß die Verbindungslinie (91) der beiden Anlenkstellen (38, 84 bzw. 44, 86) überwiegend in Richtung der axialen Erstreckung des Achskörpers (16) ausgerichtet ist und
- daß die erste Pendelstopeinrichtung (88, 90) derart ausgebildet ist, daß sie eine Relativbewegung der Anlenkstellen (38, 84 bzw. 44, 86) zueinander zuläßt, diese jedoch auf einen maximalen und/oder minimalen Abstand zwischen den Anlenkstellen (38, 84 bzw. 44, 86) begrenzt.

2. Achsaufhängung nach Anspruch 1, dadurch gekennzeichnet, daß die Verbindungslinie (91) zwischen der achsfesten Anlenkstelle (84, 86) und der chassisfesten Anlenkstelle (38, 44) im wesentlichen quer zur Fahrzeuglängsrichtung und quer zur Ausrichtung eines Federelementes (68, 70) der Federeinrichtung verläuft.

3. Achsaufhängung nach Anspruch 1 oder 2, dadurch gekennzeichnet, daß die Achse (56) des Pendellagers (54) in der quer zur axialen Erstreckung verlaufenden Achsmittelebene (62) des Achskörpers (16) und oberhalb der Drehachse (58) der an dem Achskörper (16) befestigten Räder liegt.

4. Achsaufhängung nach einem der Ansprüche 1 bis 3, dadurch gekennzeichnet, daß beidseits der Pendelachse (56) je eine chassisfeste Anlenkstelle (38, 44) angeordnet ist, an der eine zugehörige erste Pendelstopeinrichtung (88, 90) angreift, die den maximalen und/oder minimalen Abstand zwischen der chassisfesten Anlenkstelle (38, 44) und einer zugehörigen achsfesten Anlenkstelle (84, 86) begrenzt.

5. Achsaufhängung nach einem der Ansprüche 1 bis 4, dadurch gekennzeichnet, daß wenigstens eine zweite Pendelstopeinrichtung (106, 110; 108, 112) vorgesehen ist, die eine Relativbewegung zwischen Achskörper (16) und Fahrzeugaufbau (12) in vertikaler Richtung begrenzt.

6. Achsaufhängung nach Anspruch 5, dadurch gekennzeichnet, daß als eine zweite Pendelstopeinrichtung ein nach oben vorstehendes Anschlaghorn (106, 108) des Achskörpers (16) und ein oberhalb des Horns (106, 108) liegender Anschlagbereich (110, 112) des Fahrzeugaufbaus (12) dient.

7. Achsaufhängung nach einem der Ansprüche 1 bis 6, dadurch gekennzeichnet, daß die erste Pendelstopeinrichtung eine an der achsfesten Anlenkstelle (84, 86) sowie an der chassisfesten Anlenkstelle (38, 44) angreifende Kette (88, 90) mit wenigstens zwei, vorzugsweise mit drei Gliedern enthält.

8. Achsaufhängung nach Anspruch 7, dadurch gekennzeichnet, daß wenigstens eines der Endglieder (87) der Kette (88, 90) tropfenförmig ausgebildet ist und daß die zugehörige Anlenkstelle (38, 44, 84, 86) bolzenförmig ausgebildet ist und sich durch den Endgliedbereich mit erweitertem Querschnitt (92) erstreckt.

9. Achsaufhängung nach einem der Ansprüche 1 bis 8, dadurch gekennzeichnet, daß im mittleren Bereich des Achskörpers (16) zwei nebeneinander liegende achsfeste Anlenkstellen (84, 86) vorgesehen sind, an denen jeweils das erste Ende zweier Ketten (88, 90) befestigt ist, die aus wenigstens zwei, vorzugsweise drei Gliedern bestehen, die sich im wesentlichen quer zur Fahrzeugausrichtung in entgegen gesetzte Richtungen nach außen erstreckt und deren jeweils zweite Enden an zugehörigen chassisfesten Anlenkstellen (38, 44) befestigt sind, wobei die Ketten (88, 90) in neutraler Pendelwinkellage (114) des Achskörpers (16) lose sind und sich eine der Ketten (88, 90) bei Erreichen eines maximal zulässigen Pendelwinkels strafft.

10. Achsaufhängung nach einem der Ansprüche 1 bis 8, dadurch gekennzeichnet, daß die erste Pendelstopeinrichtung ein starres Verbindungselement (96) enthält, das über eine erste Anlenkung an der achsfesten Anlenkstelle (84, 86) und über eine zweite Anlenkung an der chassisfesten Anlenkstelle (38, 44) angelenkt ist und daß die erste und/oder zweite Anlenkung derart ausgebildet ist, daß eine Relativbewegung zwischen der Anlenkstelle (38, 44, 84, 86) und dem Verbindungselement (96) längs der Verbindungslinie (91) der beiden Anlenkstellen (38, 44, 84, 86) in vorgebbaren Grenzen möglich ist.

11. Achsaufhängung nach einem der Ansprüche 1 bis 10, dadurch gekennzeichnet, daß die Federeinrichtung (68, 70) im wesentlichen innerhalb des Bereichs des Fahrzeugrumpfes angeordnet ist und einen Federhub aufweist, der grundsätzlich einen Pendelwinkel zuläßt, der größer als der gewünschte maximale Pendelwinkel ist.

12. Achsaufhängung nach einem der Ansprüche 1 bis 11, dadurch gekennzeichnet, daß auf wenigstens zwei gegenüberliegenden Seiten der Pendelachse (56) im wesentlichen vertikal wirkende Hydraulikzylinder (68, 70) angeordnet sind, die jeweils einenends an dem Achskörper (16) und anderenends am Fahrzeugaufbau (12) angelenkt sind.

13. Achsaufhängung nach einem der Ansprüche 1 bis 12, dadurch gekennzeichnet, daß der Achskörper (16) Teil einer angetriebenen, lenkbaren Vorderachse ist.

14. Achsaufhängung nach einem der Ansprüche 1 bis 13, dadurch gekennzeichnet, daß der Schublenker (24) ein nach oben offenes, im wesentlichen U-förmiges Querschnittsprofil aufweist und mit seinem hinteren Ende kugelgelenkig an dem Fahrzeugaufbau (12) und mit seinem vorderen Ende starr mit dem Achskörper (16) verbunden ist und daß innerhalb des U-förmigen Schublenkers (24) eine dem Achsantrieb dienende Gelenkwelle (28) angeordnet ist.

## Claims

1. Suspension of a rigid axle body (16) pendular mounted on an industrial or agricultural vehicle (10), with
- at least one substantially vertically acting spring device (68, 70) arranged between the axle body (16) and the vehicle body (12),
- at least one thrust arm (24) running in the longitudinal direction of the vehicle, which stays the axle body (16) on the vehicle body (12) in the longitudinal direction of the vehicle,
- at least one substantially horizontal transverse arm (60) running transverse to the longitudinal axis of the vehicle, which arm is pivoted to the vehicle body (12) at one end and is connected at the other end to the axle body (16) through a pendular bearing (54),
- wherein at least one first pendular stop device (88, 90) is arranged between the axle body (16) and the vehicle body (12), with a point of attachment (84, 86) fixed relative to the axle and spaced from the pendular bearing (54) and a point of attachment (38, 44) fixed relative to the chassis,
characterized in that
- the line of connection (91) of the two point of attachments (38, 84 or 44, 86) is aligned predominantly in the direction of the axial extent of the axle body (16) and
- the first pendular stop device (88, 90) is so formed that it allows movement of the points of attachment (38, 84 or 44, 86) relative to one another but restricts this to a maximum and/or minimum spacing between the point of attachments (38, 84 or 44, 86).

2. An axle suspension according to claim 1, characterized in that the line of connection (91) between the point of attachment (84, 86) fixed relative to the axle and the point of attachment (38, 44) fixed relative to the chassis runs substantially transverse to the longitudinal direction of the vehicle and transverse to the alignment of a spring element (68, 70) of the spring device.

3. An axle suspension according to claim 1 or 2, characterized in that the axis (56) of the pendular bearing (54) lies in the axle central plane (62) extending transversely relative to the axial extent and above the axis of rotation (58) of the wheels attached to the axle body (16).

4. An axle suspension according to any of claims 1 to 3, characterized in that a point of attachment (38, 44) fixed relative to the chassis is arranged on each side of the pendular axis (56) and is engaged by an associated first pendular stop device (88, 90) which limits the maximum and/or minimum distance between the point of attachment (38, 44) fixed relative to the chassis and an associated point of attachment (84, 86) fixed relative to the axle.

5. An axle suspension according to any of claims 1 to 4, characterized in that at least one second pendular stop device (106, 110; 108, 112) is provided and limits relative movement between the axle body (16) and the vehicle body (12) in the vertical direction.

6. An axle suspension according to claim 5, characterized in that an upwardly projecting stop horn (106, 108) of the axle body (16) and a stop region (110, 112) of the vehicle body (12) lying above the horn (106, 108) serve as a second pendular stop device.

7. An axle suspension according to any of claims 1 to 6, characterized in that the first pendular stop device comprises a chain (88, 90) with at least two and preferably with three links engaging the point of attachment (84, 86) fixed relative to the axle and the point of attachment (38, 44) fixed relative to the chassis.

8. An axle suspension according to claim 7, characterized in that at least one of the end links (87) of the chain (88, 90) is shaped like a drop and in that the associated point of attachment (38, 44, 84, 86) is formed as a pin and extends through the end link region with widened cross-section (92).

9. An axle suspension according to any of claims 1 to 8, characterized in that two adjacent points of attachment (84, 86) are provided in the middle region of the axle body (16), to which are respectively fixed the first ends of two chains (88, 90) which consist of at least two and preferably three links, which extend out substantially transverse to the alignment of the vehicle in opposite directions, with their respective second ends fixed to associated points of attachment (38, 44) fixed relative to the chassis, wherein the chains (88, 90) are slack in the neutral pendular angle position (114) of the axle body (16) and one of the chains (88, 90) becomes taut on reaching a maximum permissible pendular angle.

10. An axle suspension according to any of claims 1 to 8, characterized in that the first pendular stop device comprises a rigid connecting element (96) which is linked by a first joint to the point of attachment (84, 86) fixed relative to the axle and through a second joint to the point of attachment (38, 44) fixed relative to the chassis, and in that the first and/or the second joint is so designed that relative movement between the point of attachment (38, 44, 84, 86) and the connecting element (96) is possible within predetermined limits along the line of connection (91) of the two points of attachment (38, 44, 84, 86).

11. An axle suspension according to any of claims 1 to 10, characterized in that the spring device (68, 70) is arranged substantially inside the region of the vehicle body and has a spring stroke which basically allows a pendular angle which is greater than the maximum desired pendular angle.

12. An axle suspension according to any of claims 1 to 11, characterized in that substantially vertically acting hydraulic cylinders (68, 70) are arranged at least on two opposite sides of the pendular axis (56) and are each attached at one end to the axle body (16) and at the other end to the vehicle body (12).

13. An axle suspension according to any of claims 1 to 12, characterized in that the axle body (16) is part of a driven, steered front axle.

14. An axle suspension according to any of claims 1 to 13, characterized in that the thrust arm (24) has an upwardly open, substantially U-shaped cross-sectional profile and is connected by a ball joint to the vehicle body (12) at its rear end and rigidly to the axle body (16) at its front end, and in that an articulated shaft (28) serving to drive the axle is arranged inside the U-shaped thrust arm (24).

## Revendications

1. Suspension d'un corps d'essieu rigide (16), monté de manière oscillante sur un véhicule industriel ou agricole (10), comportant
- au moins un dispositif à ressort (68, 70) à action sensiblement verticale et situé entre le corps d'essieu (16) et la carrosserie de véhicule (12),
- au moins un bras oscillant de poussée (24), qui s'étend dans le sens longitudinal du véhicule et qui sert à soutenir le corps d'essieu (16) dans le sens longitudinal du véhicule, contre la carrosserie de véhicule (12),
- au moins un bras oscillant transversal (60), qui s'étend sensiblement horizontalement et transversalement à l'axe longitudinal du véhicule et qui est, d'une part, articulé sur la carrosserie de véhicule (12) et, d'autre part, relié au corps d'essieu (16) par l'intermédiaire d'un palier d'articulation (54),
- et dans laquelle est disposé, entre le corps d'essieu (16) et la carrosserie de véhicule (12), au moins un premier dispositif d'arrêt d'oscillation (88, 90) présentant un point d'articulation (84, 86) solidaire de l'essieu et distant du palier d'articulation (54), et un point d'articulation (38, 44) solidaire du châssis,
caractérisée en ce que,
- la ligne de jonction (91) des deux points d'articulation (38, 84, ou bien 44, 86) est essentiellement orientée en direction de l'étendue axiale du corps d'essieu (16), et
- en ce que le premier dispositif d'arrêt d'oscillation (88, 90) est réalisé de telle manière qu'il autorise un mouvement relatif des points d'articulation (38, 84 ou bien 44, 86) l'un par rapport à l'autre, mais qu'il limite toutefois ce mouvement à une distance maximale et/ou minimale entre les points d'articulation (38, 84 ou bien 44, 86).

2. Suspension d'essieu selon la revendication 1, caractérisée en ce que la ligne de jonction (91) entre les points d'articulation (84, 86) solidaires de l'essieu et les points d'articulation (38, 44) solidaires du châssis s'étend sensiblement transversalement au sens longitudinal du véhicule et transversalement à l'orientation d'un élément faisant ressort (68, 70) du dispositif à ressort.

3. Suspension d'essieu selon la revendication 1 ou 2, caractérisée en ce que l'axe (56) du palier d'articulation (54) est situé dans le plan médian d'essieu (62), qui s'étend transversalement à l'étendue axiale, du corps d'essieu (16) et au-dessus de l'axe de rotation (58) des roues fixées au corps d'essieu (16).

4. Suspension d'essieu selon l'une des revendications 1 à 3, caractérisée en ce que chaque fois un point d'articulation (38, 44) solidaire du châssis est disposé de part et d'autre de l'axe d'oscillation (56) et en ce qu'il lui est appliqué un premier dispositif d'arrêt d'oscillation (88, 90) associé, qui limite la distance maximale et/ou minimale entre le point d'articulation (38, 44) solidaire du châssis et un point d'articulation (84, 86) solidaire de l'essieu.

5. Suspension d'essieu selon l'une des revendications 1 à 4, caractérisée en ce qu'il est prévu au moins un second dispositif d'arrêt d'oscillation (106, 110 ; 108, 112), qui limite un mouvement relatif, dans le sens vertical, entre le corps d'essieu (16) et la carrosserie de véhicule (12).

6. Suspension d'essieu selon la revendication 5, caractérisée en ce que l'on utilise, en tant que second dispositif d'arrêt d'oscillation, une protubérance formant butée (106, 108), faisant saillie vers le haut à partir du corps d'essieu (16), et une zone formant butée (110, 112), située sur la carrosserie de véhicule (12) et disposée au-dessus de la protubérance (106, 108).

7. Suspension d'essieu selon l'une des revendications 1 à 6, caractérisée en ce que le premier dispositif d'arrêt d'oscillation comporte une chaîne (88, 90) montée au point d'articulation (84, 86) solidaire de l'essieu ainsi qu'au point d'articulation (38, 44) solidaire du châssis, laquelle chaîne comprend au moins deux maillons et, de préférence, trois maillons.

8. Suspension d'essieu selon la revendication 7, caractérisée en ce qu'au moins l'un des maillons d'extrémité (87) de la chaîne (88, 90) est réalisé en forme de goutte et en ce que le point d'articulation (38, 44, 84, 86) associé est conformé en tourillon et s'étend dans la zone du maillon d'extrémité présentant une section de passage (92) agrandie.

9. Suspension d'essieu selon l'une des revendications 1 à 8, caractérisée en ce qu'il est prévu, dans la zone médiane du corps d'essieu (16), deux points d'articulation (84, 86) solidaires de l'essieu et situés côte à côte, et auxquels est chaque fois fixée la première extrémité de deux chaînes (88, 90), qui consistent en au moins deux maillons et, de préférence, en trois maillons, s'étendant vers l'extérieur dans des directions opposées et sensiblement transversalement à l'orientation du véhicule, et dont chaque fois les deuxièmes extrémités sont fixées à des points d'articulation (38, 44) associés et solidaires du châssis, les chaînes (88, 90) étant lâches dans la position angulaire neutre d'oscillation (114) du corps d'essieu (16), tandis que l'une des chaînes (88, 90) se tend lorsqu'est atteint un angle d'oscillation maximal admissible.

10. Suspension d'essieu selon l'une des revendications 1 à 8, caractérisée en ce que le premier dispositif d'arrêt d'oscillation comporte un élément rigide de liaison (96), qui est relié de manière articulée, par l'intermédiaire d'une première articulation, au point d'articulation (84, 86) solidaire de l'essieu et, par l'intermédiaire d'une seconde articulation, au point d'articulation (38, 44) solidaire du châssis, et en ce que la première et/ou la seconde articulation(s) est ou sont conçue(s) de telle manière qu'un mouvement relatif soit possible, dans des limites prédéfinissables, entre le point d'articulation (38, 44, 84, 86) et l'élément de liaison (96) suivant la ligne de jonction (91) des deux points d'articulation (38, 44, 84, 86).

11. Suspension d'essieu selon l'une des revendications 1 à 10, caractérisée en ce que le dispositif à ressort (68, 70) est disposé sensiblement à l'intérieur de la zone du corps du véhicule et présente une course élastique, qui autorise fondamentalement un angle d'oscillation, qui est plus grand que l'angle d'oscillation maximal souhaité.

12. Suspension d'essieu selon l'une des revendications 1 à 11, caractérisée en ce qu'il est prévu, sur au moins deux côtés opposés de l'axe d'oscillation (56), des vérins hydrauliques (68, 70) à action sensiblement verticale et chaque fois montés de manière articulée, par une extrémité, au corps d'essieu (16) et, par l'autre extrémité, à la carrosserie de véhicule (12).

13. Suspension d'essieu selon l'une des revendications 1 à 12, caractérisée en ce que le corps d'essieu (16) fait partie d'un essieu avant commandé et orientable.

14. Suspension d'essieu selon l'une des revendications 1 à 13, caractérisée en ce que le bras oscillant de poussée (24) présente un profil de la section transversale sensiblement en forme de U ouvert vers le haut, et en ce qu'il est relié, par son extrémité arrière, par un joint à rotule, à la carrosserie de véhicule (12) et, par son extrémité avant, de manière rigide au corps d'essieu (16), et en ce qu'un arbre articulé de transmission (28), servant à l'entraînement de l'essieu, est placé à l'intérieur du bras oscillant de poussée (24) en forme de U.
